# EUROPÄISCHE PATENTSCHRIFT

(11) **EP 1 771 813 B1**
(45) Veröffentlichungstag und Bekanntmachung des Hinweises auf die Patenterteilung: **02.03.2011**
(21) Anmeldenummer: 05768612.3
(22) Anmeldetag: 26.07.2005
(51) Int. Cl.: G06K 19/06

(54) **Verfahren zum Codieren von Daten mittels Rasterdruckdatenspeicher**
Method for encoding data via matrix print data storage
Procédé pour coder des données via un stockage de données par impression matricielle

(30) Priorität: 29.07.2004 DE 102004036809
(43) Veröffentlichungstag der Anmeldung: 11.04.2007
(73) Patentinhaber: Wirnitzer, Bernhard, 69502 Hemsbach (DE)
(72) Erfinder: WIRNITZER, Bernhard, 69502 Hemsbach (DE); BONEV, Slavtcho, 68165 Mannheim (DE)
(74) Vertreter: Wagner, Jutta
(86) Internationale Anmeldenummer: PCT/EP2005/008097
(87) Internationale Veröffentlichungsnummer: WO 2006/013037

(56) Entgegenhaltungen:
- EP-A- 0 469 864
- EP-A- 0 665 510
- WO-A-98/50882
- US-A1- 2002 150 276
- US-B1- 6 176 427
- US-B1- 6 212 504

## Beschreibung

Die Erfindung bezieht sich auf ein Verfahren zum Codieren von digitalen Daten mittels Rasterdruckdatenspeicher.

Die Speicherung von Information durch Beschreiben von Gegenständen geht zurück bis zu den ägäischen und hethitischen Hieroglyphen. Dabei dienen definierte Muster als Symbole für Worte, Silben oder Buchstaben. Zur Speicherung von digitalen Daten wird den Mustern ein so genanntes Informationsbit oder eine Informationsbitfolge zugeordnet.

In der US-PS 5 315 089 werden nicht rotationssymmetrische Muster definiert verdreht, um digitale Daten zu speichern. Weitereinwicklungen der Technik ermöglichen die Überlagerung von visueller Information, wie z.B. in der US-PS 5 706 099 beschrieben. Dabei werden in einer Rasterzelle in den Ecken zwei 90-Grad-Kreisbögen gedruckt. Die Rasterzellen werden zur Datencodierung um 90 Grad gedreht. Unterschiedliche Grautöne werden durch unterschiedlich dicke Kreisbögen erzielt. In der US-PS 5 315 098 ist eine Weiterentwicklung aufgezeigt, die den visuellen Eindruck der codierten Rasterbilder verbessert.

Dem bislang aufgezeigten Stand der Technik ist gemein, dass die Datendichte der Codes stärker beschränkt ist als man zunächst erwartet. Der Grund liegt darin, dass in der digitalen Drucktechnik einzelne Rasterpunkte praktisch nicht gedruckt werden können. Auch eng benachbarte Linien laufen leicht ineinander. Das Ineinanderlaufen der Rasterpunkte wird durch schlechte Optiken in den Lesegeräten noch verstärkt. Bei der Verwendung eines Laserdruckers mit 1200dpi kann der in der US-PS 5 315 089 beschrieben Datenstreifen ca. 6000 bit/cm² speichern (Bruttodatendichte ohne Redundanz zu Fehlersicherung). Dabei wird in einer Zelle von 6x6 Rasterpunkten ein Informationsbit gespeichert.

In der DE 199 26 194 ist ein Datenstreifen und ein Verfahren zur Codierung und Decodierung beschrieben, mit dem es möglich ist, durch Bedrucken eines Datenträgers digitale Daten mit einer hohen Datendichte zu speichern und danach wieder auszulesen. Ein derartiger Datenspeicher kann zum Beispiel dazu verwendet werden, um komprimierte Audiodaten auf Papier zu speichern und danach mit einem einfachen Handgerät auszulesen und akustisch wiederzugeben. Das zugehörige Verfahren beruht darauf, dass verschiedene zweidimensionale Muster auf die Unterlage gedruckt werden, wobei jedes dieser Muster einem Informationsbit oder einer Bitfolge entspricht. Bei der Decodierung wird eine zweidimensionale Mustererkennung eingesetzt, um die Bitfolge zu rekonstruieren. Das Ziel einer hohen Datendichte wird dadurch erreicht, dass in den Datenstreifen an definierten Stellen bekannte zweidimensionale Muster eingebaut werden, die keine Information tragen. Diese Muster dienen als Trainingsmuster für das Lesegerät. Treten nun beim Druckprozess oder im Lesegerät Störungen, wie z.B. ein Verfließen der Druckfarbe oder eine Unschärfe bei der optischen Abbildung, auf, so können diese Einflüsse im Lesegerät berücksichtigt werden.

In der deutschen Patentanmeldung DE 103 45 669 A1 ist sodann ein Datenstreifen mit Kopierschutz und ein Verfahren zum Codieren solcher Datenstreifen beschrieben. Der Kopierschutz wird dadurch erzielt, dass das Material des Datenträgers eine lokal zufällige Strukturkomponente enthält und ein von Datenstreifen zu Datenstreifen verschiedener Sicherungscode als Fälschungs- und Kopierschutz abgelegt wird. Der Sicherungscode ist dabei abhängig von der zufälligen Strukturkomponente. Im Falle eines bedruckten Datenstreifens kann neben der Strukturkomponente des Datenträgers vorteilig auch die Wechselwirkung der Strukturkomponente mit der Druckfarbe gemessen, codiert und als Sicherungscode eingefügt werden.

Bei der praktischen Umsetzung des in DE 103 45 669 A1 beschriebenen Verfahrens zeigt sich, dass die Messung der zufälligen Strukturkomponente dann sehr schwierig wird, falls der Datenstreifen mit hoher Auflösung gedruckt wurde. Erstens fließen die Druckpunkte dann leicht ineinander und dieses Ineinanderfließen ist nur sehr bedingt ein Zufallsprozess, der für den Fälschungsschutz verwendet werden kann. Zweitens bewirkt eine endliche Ortsauflösung des Lesegeräts, dass das Ineinanderfließen im aufgenommen Bild noch verstärkt erscheint. Innerhalb des Datenstreifens ist dann kaum noch eine verwertbare Zufallsstruktur messbar.

Ferner beziehen sich folgende Dokumente auf die Speicherung von Datenmengen mittels gedruckter Datenspeicher:

So beschreibt die EP 0 665 510 A1, die den Oberbegriff des Anspruchs 1 bildet, einen zweidimensionalen Matrixcode zur Speicherung hoher Datenmengen, die mit hoher Geschwindigkeit und hoher Genauigkeit verarbeitet werden können. Dazu wird eine Vielzahl von so genannten Codemarken matrixartig angeordnet.

In der EP 0 469 864 A2 werden rotationsvariante Muster um 90 Grad gedreht, um ein Bit Information zu codieren.

In der WO 98/50882 werden farbige Symbole zur Erhöhung der Datendichte verwendet.

Die US 6 176 427 B1 legt einen gedruckten Datenspeicher der eine variable Formatierung erlaubt, dar. Weiterhin werden spezielle Kalibrierungselemente beschrieben, die es erlauben, geometrische Verzeichnungen des Scanvorgangs zu korrigieren.

Die Erfindung hat sich die Aufgabe gestellt, einen auf einem Gegenstand wie insbesondere Papier aufgebrachten Rasterdruck so auszubilden, dass er als Datenspeicher verwendet werden kann und dass bei einer Erhöhung der Datendichte das Problem des Ineinanderfließens der Farbe nicht zu einer Zerstörung des Datenspeichers führt, sowie ein Verfahren zum entsprechenden, einfachen Codieren und Decodieren der Daten anzugeben. Diese Aufgabe wird gemäß der Erfindung durch die Merkmale des Anspruchs 1 gelöst. Der Nutzeffekt liegt darin, dass in einer Rasterzelle zusätzliche Informationsbits gespeichert werden können, ohne dass mehr Fläche bedruckt wird und die Anforderungen an den Druck oder den Decoder steigen. Die Technik eignet sich als Folge besonders gut zur Erstellung von Datenstreifen mit Kopierschutz wie in DE 103 45 669 A1 beschriebenen oder zur Erstellung von fälschungsgeschützten Dokumenten wie in DE 10 2005 013 962 beschrieben.

Es wird ein Rasterdruck zur Speicherung von codierten Daten mit hoher Datendichte wie folgt ausgelegt. Die zu bedruckende Fläche eines Gegenstands wird in aneinander grenzende, aus Rasterpunkten bestehenden Rasterzellen mit vordefinierter Form unterteilt. In jeder Rasterzelle werden mindestens zwei unterschiedliche Muster R, I, ... gedruckt, derart, dass jedes der Muster R, I, ...
i) aus paarweise gleichflächigen, nicht überlappenden Mustern (R₀,R₁) bzw. (I₀,I₁) ausgewählt ist,
ii) mit mindestens einem Rasterpunkt an ein anderes Muster der gleichen Rasterzelle grenzt und
iii) unterschiedliche Rasterpunkte in der Rasterzelle belegt.

Hierdurch wird erreicht, dass in jeder Rasterzelle mindestens zwei Informationsbits gespeichert sind. Im Falle von nur zwei Mustern R und I liegt ein so genanntes komplexes Symbol mit dem Realteil R und dem Imaginärteil I vor. Dabei bezeichnet das Wort Symbol, die dem gedruckten Mustern zugeordnete Logik. Die Muster R, I,... sind nun erfindungsgemäß so ausgelegt, dass sie sich zu zusammenhängenden Druckflecken ergänzen. Derartige zusammenhängende Druckflecken stellen einen geringen Anspruch an die Drucktechnik, solange die einzelnen Flecken unterschiedlicher Rasterzellen nicht zu nahe beieinander liegen. Dadurch, dass weiterhin jedes der Muster R, I, ... unterschiedliche Rasterpunkte in der Rasterzelle belegt, liegen so genannte orthogonale Muster vor, die später besonders gut zu unterscheiden sind.

Indem mindestens eines der Muster R, I, ... an den Rand der Rasterzelle und zusätzlich an mindestens ein Muster R, I, ... einer anderen Rasterzelle grenzt, kann durch Verkleinerung der Rasterzellen die bedruckte Fläche reduziert und damit die Datendichte erhöht werden. Die Rasterzellen werden dabei so klein ausgelegt, dass dadurch die Flecken bis an die Grenzen der Rasterzellen gehen, aber dort gezielt mit den Flecken anderer Rasterzellen zusammenwachsen. Die Druckfarbe kann damit gezielt zwischen den Flecken verschiedener Rasterzellen verlaufen, ohne dass sich das Gesamtdruckbild wesentlich verändert.

Indem in manchen Rasterzellen an den Rändern der Muster R, I,... eine definierte Anzahl Rasterpunkte weggelassen oder ergänzt werden, oder indem in einer Rasterzelle die bedruckten Gebiete durch unbedruckte ausgetauscht werden ist es möglich, den gespeicherten Daten visuelle Information zu überlagern, ohne dass die Datenspeicherung stark gestört wird. Das Ergänzen und Weglassen von Rasterpunkten ist auch vorteilhaft, um möglichst runde Druckflecken zu erzielen. Es kann aber auch verwendet werden, um zusätzliche Information in einer Rasterzelle zu speichern. Im Falle eines komplexen Symbols spricht man auch von höherwertigen komplexen Symbolen. Existieren z.B. die Muster R und I in jeweils in einer größeren und kleineren Ausprägung, so können 16 verschiedene Gesamtmuster erzeugt werden und damit ist eine Codierung von 4 Informationsbit in einer einzigen Rasterzelle möglich. Um die Anforderungen an den Druck nicht zu erhöhen ist jedoch wichtig, dass bei dem Ergänzen und Weglassen der Rasterpunkt das Muster des Realteils noch an das Muster des Imaginärteils grenzt.

Die Muster R, I, ...können in unterschiedlichen Farben gedruckt werden, um den Rasterdruckdatenspeicher visuell erkennbare, farbige Grafiken zu überlagern oder aber zusätzliche digitale Informationsbits zu speichern. Im letzteren Fall sollten die Farben durch einen Scanner deutlich unterscheidbar sein.

Der Rasterdruckdatenspeicher kann für den Fälschungsschutz von gedruckten Papierdokumenten verwendet werden. Der Rasterdruckdatenspeicher kann dabei auf einer relativ kleinen Fläche den gesamten Inhalt des Dokuments und/oder die individuelle Papierstruktur des bedruckten Papierbogens speichern. Durch den Einsatz bekannter Verschlüsselungstechniken kann damit später die Integrität des Inhalts überprüft werden, und/oder jeder Papierbogen ist für eine spätere Kopieerkennung vorbereitet.

Jeder Papierbogen ist, für die spätere fehlerfreie Messung der individuellen Papierstruktur, vorteilhaft mit einem zusätzlichen Kalibrierungselement bedruckt. Falls im bedruckten Gebiet des Kalibrierungselements nur zwischen 2% und 15% der Papierfläche mit Druckfarbe bedeckt ist, wird bei einem späteren Scannvorgang gleichzeitig die Papierstruktur des Bogens erfasst. Besonders geeignet sind Kalibrierungselemente, die aus aneinandergrenzenden Rasterzellen aufgebaut sind. In benachbarten Rasterzellen ist eine Folge von mindestens zwei unterschiedlichen Mustern gedruckt und die Musterfolge wiederholt sich mindestens teilweise nach 3x5 oder 7x9 Rasterzellen. Derartige Musterfolgen sind besonders gut geeignet, um die Übertragungseigenschaften von Lesegeräten, wie z.B. Scanner zu messen. Der zunächst überraschende Vorteil der Wiederholung der Musterfolgen nach 3x5 oder 7x9 Rasterzellen liegt an bekannten Korrelationseigenschaften von so genannten zweidimensionalen m-Sequenzen. Einen weiterer Vorteil bei der praktischen Umsetzung ergibt sich dadurch, dass von Papierbogen zu Papierbogen eine unterschiedliche, vom Menschen und/oder einer Maschine lesbare Kennzeichnung angebracht ist. Die Erstellung der fälschungsgeschützten Dokumente wird erleichtert. Die individuelle Papierstruktur jedes Bogens kann dann unter dieser Kennzeichnung in einer Datenbank abgelegt werden. Bei der Erstellung des fälschungsgeschützten Dokuments wird auf diese Datenbank zugegriffen. Diese Vorgehensweise ist von größtem praktischen Nutzen. Nachdem die Daten von der Datenbank abgegriffen wurden, kann der Datenbankeintrag mit den Papierstrukturdaten gelöscht werden.

Der große Vorteil der beschriebenen Erfindung liegt in der Erhöhung der Datendichte bis auf das Vierfache gegenüber dem Stand der Technik, ohne dass die Anforderungen an den Druck oder der Aufwand für den Decoder steigen. Die geringen Anforderungen an den Druck haben ihre Ursache in dem Zusammenwachsen der Muster R, I,..., wie oben erklärt. Die einfache und zuverlässige Decodierung rührt von der Orthogonalität der Muster R, I, ... her, was für den Fall komplexer zweiwertiger Symbole (R, I) kurz erläutert wird. Nach dem Einlesen des Rasterdruckbildes erfolgt in einer Taktbestimmung die Berechnung der Position der Rasterzellen. Die Bildintensitäten jeder Rasterzelle werden dann einem komplexen, zweidimensionalen digitalen Filtern zugeführt. Bei geeigneter Wahl der Filterkoeffizienten ergibt sich, aufgrund der Orthogonalität der Muster, am Filterausgang im rauschfreien Fall einer der Werte (± 3, ± 1; ± j, ± 3j), womit 4 Informationsbits codiert sind. Die geeigneten Filterkoeffizienten findet man z.B. durch Lösen eines linearen Gleichungssystems nach der Methode der kleinsten Quadrate. Die komplexe Linearkombination der Bildintensitäten der Rasterzelle muss dabei einen der Werte (± 3, ± 1; ± j, ± 3j) ergeben. Im vorliegenden Beispiel werden vier Bit mit einem einzigen komplexen Filter decodiert. Der Rechenaufwand pro Bit ist also sogar um den Faktor 2 geringer als in dem Fall, dass in einer Rasterzelle nur 1 Bit gespeichert ist.

Eine weitere vorteilige Methode für den Decoder ist ein zweischichtiges neuronales Netz NN, dem die Bildpunkte einer Rasterzelle zugeführt werden. Die Dimension der verdeckten Schicht und die Gewicht werden dann durch Computersimulationen optimiert und bestimmt. Der Vorteil gegenüber der zuerst dargestellten Filter-Methode ist die Möglichkeit des NN auf Nichtlinearitäten des Drucks zu reagieren. Weiterhin kann die Ortsauflösung im Lesegerät reduziert sein, wie theoretisch noch nicht erklärte Experimente zeigen. Konkret kann ein 1200 dpi Druck mit einem 1200 dpi Scanner eingelesen werden. Bei der Filter-Methode wäre, aufgrund des Abtasttheorems, ein 2400 dpi Scanner nötig.

Nachfolgend wird die Erfindung anhand von Zeichnungen und Ausführungsbeispielen genauer erläutert. Dabei zeigen:
**Fig. 1** den Aufbau eines komplexen Symbols aus Realteil und Imaginärteil,
**Fig. 2** Modifikationen der gedruckten Muster an den Rändern,
**Fig. 3** weitere Modifikationen der gedruckten Muster an den Rändern,
**Fig. 4** ein Beispiel für einen Rasterdruckdatenspeicher,
**Fig. 5** die Verwendung des Rasterdruckdatenspeichers auf einem Dokumentenpapier mit Kalibrierungselement,
**Fig. 6** eine spezielle vorteilhafte Auslegung des Kalibrierungselements,
**Fig. 7** die Erstellung eines fälschungsgeschützten Dokuments.

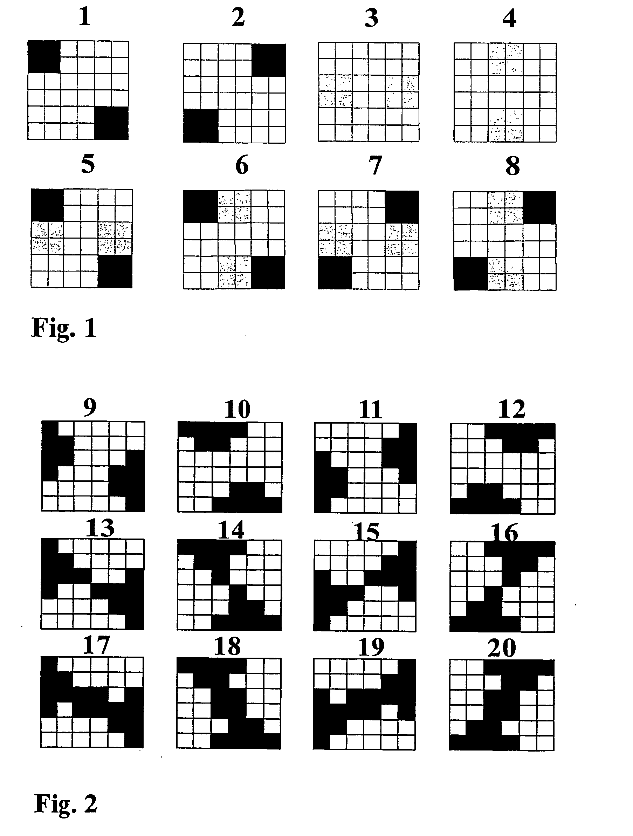

**Fig. 1** zeigt Rasterzellen aus 6x6 Rasterpunkten. In die Rasterzelle 5 ist ein so genanntes komplexes Symbol gedruckt, das aus dem Realteil R 1 und Imaginärteil I 3 besteht. Der Realteil R wird aus den zwei Mustern R₀ 1 oder R₁ 2 ausgewählt, ebenso der Imaginärteil I aus den Mustern I₀ 3 oder I₁ 4. In einem komplexen Symbol können damit zwei Informationsbits gespeichert sein. Die zum Realteil gehörigen Muster 1 und 2 codieren die Informationsbits NULL bzw. EINS. Die zum Imaginärteil gehörigen Muster 3 und 4 codieren ebenso die Informationsbits NULL bzw. EINS. Im vorliegenden Beispiel ist in der Rasterzelle 5 die Informationsbitfolge NULL-NULL codiert. Die Rasterzellen 6, 7 und 8 codieren die Informationsbitfolgen NULL-EINS, EINS-NULL und EINS-EINS. Dadurch, dass der Realteil und der Imaginärteil des komplexen Symbols für jede Informationsbitfolge aneinander grenzen, entstehen zusammenhängende Flecken, die sich besonders gut drucken lassen. Jedes komplexe Symbol besteht weiterhin aus zwei symmetrisch angeordneten Flecken. Diese Symmetrie unterstützt später die einfache Decodierung. Ein weiterer Vorteil ist, dass jedes der vier zusammengesetzten Gesamtmuster 5, 6, 7, 8 unterschiedliche Rasterpunkte in der Rasterzelle belegt. Die vier Gesamtmuster sind also im mathematischen Sinne orthogonal. Dies beinhaltet die erfindungsgemäß geforderte Orthogonalität zwischen Realteil R und Imaginärteil I. In der Abbildung sind die Realteile und die Imaginärteile zur Verdeutlichung bewusst in unterschiedlichen Grauwerten dargestellt, was natürlich in der Anwendung nicht nötig ist.
**Fig. 2** zeigt die erfindungsgemäße Modifikation der Muster an den Rändern. Die Gesamtmuster 9, 10, 11 und 12 entstehen aus den Gesamtmustern 5, 6, 7 und 8 indem an den Rändern jeweils 2 Rasterpunkte nicht besetzt werden. Die Muster des Realteils und des Imaginärteils verlieren dabei je einen Rasterpunkt, der jeweils am Rand des Gesamtmusters liegt. Die Gesamtmuster 13, 14, 15 und 16 bzw. 17, 18, 19 und 20 entstehen aus den Gesamtmustern 5, 6, 7 und 8, dadurch, dass an den Rändern ein bzw. zwei Rasterpunkte zusätzlich besetzt sind. Diese Rasterpunkte ermöglichen es, dem Rasterdruck visuelle Information zu überlagern, zusätzlich zu den gespeicherten Daten. Je mehr oder je weniger Rasterpunkte gesetzt sind, desto dunkler bzw. heller erscheint die Rasterzelle dem Auge. Die zusätzlichen Rasterpunkte können aber auch verwendet werden, um zusätzliche Daten zu codieren. Für die spätere Decodierung ist vorteilhaft, dass bei der Besetzung der Randpunkte in den Gesamtmustern 13 bis 20 die zugrunde liegenden Muster der Realteile und Imaginärteile orthogonal bleiben.

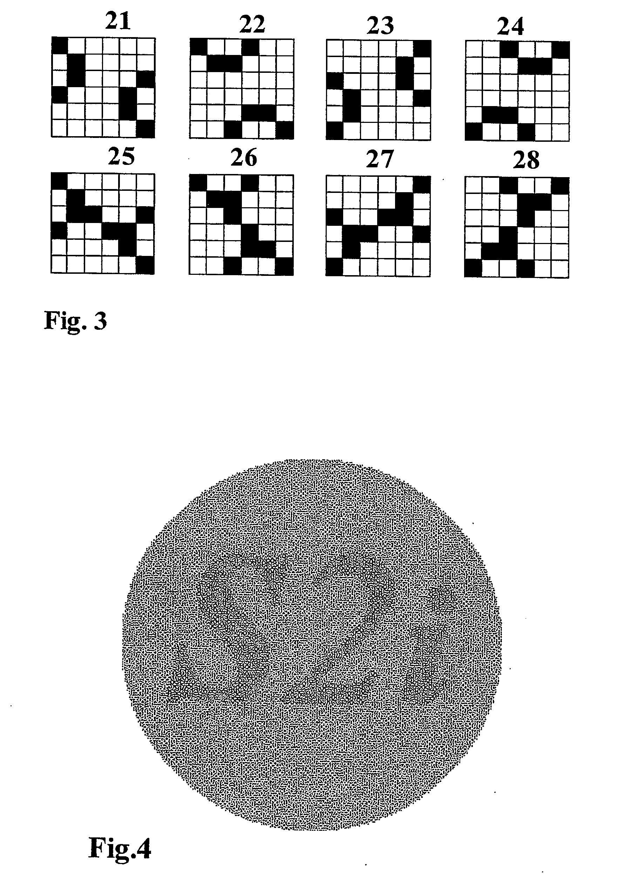

**Fig. 3** zeigt in den Gesamtmustern 21, 22, 23, 24 und 25, 26, 27, 28 eine andere Modifikation der Randpunkte, die besonders bei Druckprozessen nützlich ist, bei denen die Farbe stark verfließt.
**Fig. 4** zeigt einen Rasterdruckdatenspeicher bei Verwendung der Gesamtmuster 9 bis 16. Da die Muster bis an die Grenzen der Rasterzellen gehen, wachsen sie mit den Mustern benachbarter Zellen zu größeren Flecken zusammen, was sich besonders geringe Anforderungen an den Druckprozess stellt. Bei Verwendung eines handelsüblichen Laserdruckers mit 1200dpi hat der dargestellte Rasterdruckdatenspeicher einen Durchmesser von 2,07cm und speichert 41,2kbit, was einer Datendichte von 12400bit/cm² entspricht. Dies liegt einen Faktor zwei über den bekannten Stand der Technik. Wird auf die Überlagerung der visuellen Information verzichtet, so lassen sich sogar 18600bit/cm² speichern und einfach decodieren.

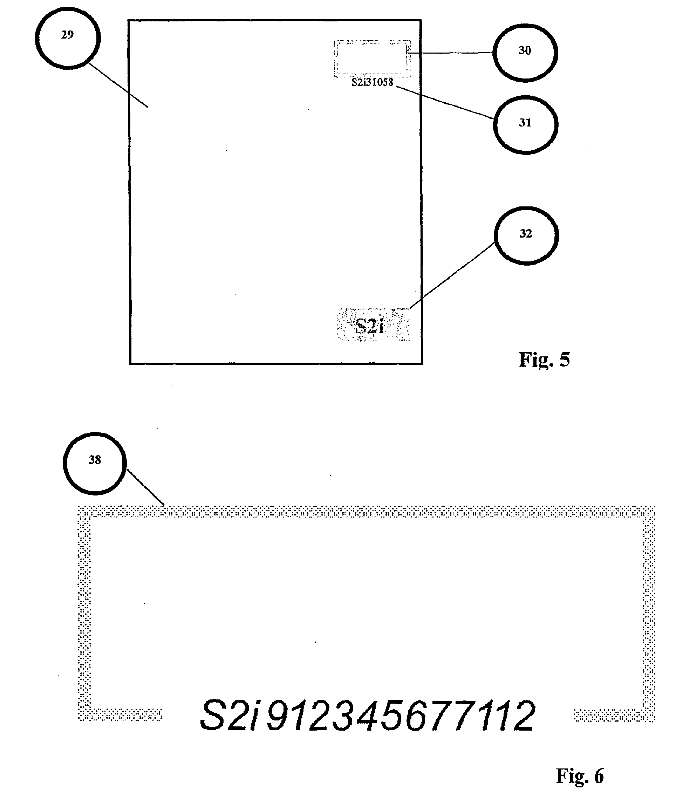

**Fig. 5** zeigt die Verwendung des Rasterdruckdatenspeichers in Verbindung mit einem Dokumentenpapier 29 mit Kalibrierungselement 30. Das Kalibrierungselement 30 besteht aus einem sehr feinen Aufdruck, der dazu dient den Scanner bei der Überprüfung des Papierfingerabdrucks zu kalibrieren. Es sind definierte, optimierte Muster aufgedruckt, die es später erlauben, die Übertragungsfunktion des Scanners zu messen und zu kompensieren, sowie die Gebiete zu finden, in denen der Papier-Fingerabdruck gemessen wird. Zusätzlich enthält das Dokumentenpapier 29 eine individuelle Kennziffer 31, die vorteilhaft in das Kalibrierungselement 30 integriert ist. Der Rasterdruckdatenspeicher 32 enthält die digitalen, verschlüsselten Daten des Papier-Fingerabdruckes in der Umgebung des Kalibrierungselements 30 und weitere Daten, wie z.B. persönliche Daten zur Authentifizierung des Urhebers des Dokumentes.
**Fig. 6** zeigt eine vorteilhafte Auslegung des Kalibrierungselements. Das Druckmuster 38 ist aus Pseudo-Zufallsfolgen abgeleitet und hat eine Periodizität von 3x5 Druckelementen. Derartige, so genannte zweidimensionale m-Sequenzen sind besonders gut für die Kalibrierung des Scanners geeignet. Das Druckmuster 38 ist außerdem bewusst kontrastarm ausgelegt, damit bei einem Scannvorgang gleichzeitig die Papierstruktur erfasst wird. Je nach verwendeter Druckfarbe werden Kontraste zwischen 2% und 15% verwendet.

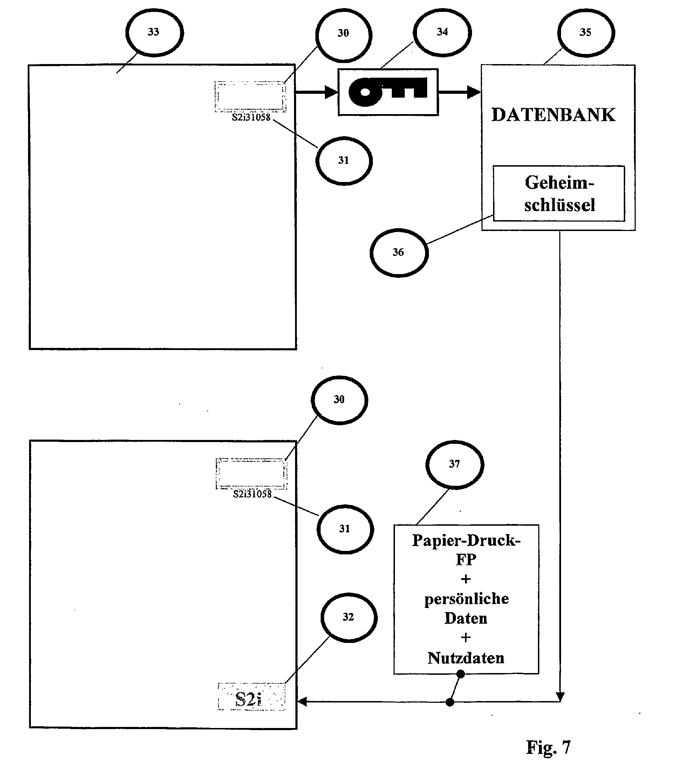

**Fig. 7** veranschaulicht das Verfahren zur einfachen Herstellung eines fälschungsgeschützten Dokuments. Das Dokumentenpapier ist zunächst noch ein Halbzeug 33 mit dem aufgedruckten, vorzugsweise mit einer durchsichtigen Folie überzogenen, Sicherungselement 30. Das Halbzeug wird in großen Stückzahlen preiswert hergestellt. Das Sicherungselement jedes Halbzeugs 33 wird nun gescannt, und die Daten werden unter der individuellen Kennziffer 31 in einer Datenbank 35 abgelegt. Das Scannen der Halbzeuge 33 kann mit erprobten Belegscannern mit hoher Geschwindigkeit, sehr preiswert und mit höchster Qualität erfolgen. Vorzugsweise werden die digitalen Daten in Hinblick auf die spätere Verifikationsaufgabe einer Datenreduktion und einer anschließenden Datenkompression unterzogen; dies kann nach dem Scannvorgang in einer Stapelverarbeitung erfolgen, zu Zeiten in denen der Rechner nicht ausgelastet ist. Bei der Erstellung eines fälschungsgeschützten Dokuments werden die Daten über den Papierfingerabdruck von der Datenbank 35 gelesen und das Halbzeuge 33 wird mit dem individualisierten Rasterdruckdatenspeicher 32 versehen. Bei der Berechnung des Rasterdruckdatenspeichers wird bevorzugt der geheime Schlüssel 36 eines PKS (engl. public key system) 34 eingesetzt. Der Rasterdruckdatenspeicher 32 speichert die Information über den Papierfingerabdruck, persönliche Daten und Nutzdaten. In einer speziellen Einheit 37 können diese Daten auch so kombiniert werden, dass sie bei der Erstellung einer Kopie verloren gehen.

## Patentansprüche

1. Verfahren zum Speichern von codierten Daten durch Aufbringen eines Rasterdrucks auf einen Gegenstand, wobei die bedruckte Fläche des Gegenstands in aneinander grenzende, aus Rasterpunkten bestehenden, Rasterzellen mit vordefinierter Form unterteilt ist und in jeder Rasterzelle mindestens zwei Muster R,I, ... gedruckt werden, **dadurch gekennzeichnet, dass** zur Speicherung von mindestens zwei Informationsbits jedes der Muster R, I, ...
i.) aus paarweise gleichflächigen, nicht überlappenden Untermustern (R₀,R₁) bzw. (I₀,I₁) ausgewählt wird,
ii.) mit mindestens einem Rasterpunkt an ein anderes Untermuster der gleichen Rasterzelle grenzt,
iii.) unterschiedliche Rasterpunkte in der Rasterzelle belegt,
iv.) und wobei mindestens eines der Muster R,I, ... an den Rand der Rasterzelle und zusätzlich an mindestens ein Muster R,I, ... einer anderen Rasterzelle angrenzend gedruckt wird.

2. Verfahren nach Anspruch 1, **dadurch gekennzeichnet, dass** die Muster R,I ein zusammengesetzes Muster ergeben, das zwei Drittel jedes der
- vertikalen Randbereiche einer rechteckigen Rasterzelle links oben und rechts unten, oder der
- horizontalen Randbereiche einer rechteckigen Rasterzelle links oben und rechts unten, oder der
- vertikalen Randbereiche einer rechteckigen Rasterzelle rechts oben und links unten, oder der
- horizontalen Randbereiche einer rechteckigen Rasterzelle rechts oben und links unten, belegt.

3. Verfahren nach Anspruch 2, **dadurch gekennzeichnet, dass** zur Speicherung von mindestens einem zusätzlichen Informationsbit an mindestens einem der Muster R, I, ... informationsabhängig eine definierte Anzahl Rasterpunkte am Rand weggelassen oder ergänzt wird.

4. Verfahren nach Anspruch 3, **dadurch gekennzeichnet, dass** das Weglassen oder Ergänzen der definierten Anzahl an Rasterpunkte an den belegten zwei Dritteln der
- vertikalen Randbereiche der rechteckigen Rasterzelle links oben und rechts unten ein Muster (9,13,17), und der
- horizontalen Randbereiche der rechteckigen Rasterzelle links oben und rechts unten ein Muster (10,14,18), und der
- vertikalen Randbereiche der rechteckigen Rasterzelle rechts oben und links unten ein Muster (11,15,19), und der
- horizontalen Randbereiche der rechteckigen Rasterzelle rechts oben und links unten ein Muster (12,16,20)
ergibt.

5. Verfahren nach mindestens einem der Ansprüche 1 bis 4, **dadurch gekennzeichnet, dass** zur Überlagerung visueller Information in einer Rasterzelle die bedruckten Gebiete durch unbedruckte ausgetauscht werden.

6. Verfahren nach mindestens einem der Ansprüche 1 bis 5, **dadurch gekennzeichnet, dass** in einer Rasterzelle die Muster R, I, .... in unterschiedlichen Farben gedruckt werden, um visuell erkennbare, farbige Grafiken zu überlagern oder aber zusätzliche digitale Informationsbits zu speichern.

7. Verfahren nach mindestens einem der Ansprüche 1 bis 6, **dadurch gekennzeichnet, dass** der Rasterdruckdatenspeicher auf Papier aufgebracht wird und **dadurch** digitale Daten und /oder Daten über die individuelle Papierstruktur gespeichert werden.

8. Verfahren nach Anspruch 7, **dadurch gekennzeichnet, dass** ein Papier verwendet wird, das ein zusätzliches, aufgedrucktes Kalibrierungselement enthält, bei dem nur zwischen 2% und 15% der Papierfläche mit Druckfarbe bedeckt sind.

9. Verfahren nach Anspruch 8, **dadurch gekennzeichnet, dass** das verwendete Papier vorher mit einem Kalibrierungselement bedruckt wird, das aus Rasterzellen aufgebaut ist, in den benachbarten Rasterzellen eine Folge von mindestens zwei unterschiedlichen Mustern gedruckt wird, derart, dass sich die Musterfolge mindestens teilweise nach 3x5 oder 7x9 Rasterzellen wiederholt.

10. Verfahren nach mindestens einem der Ansprüche 7 bis 9, **dadurch gekennzeichnet, dass** eine, für jeden Papierbogen unterschiedliche, vom Menschen und/oder einer Maschine lesbare Kennzeichnung verwendet wird, um die Daten über die individuelle Papierstruktur von einer Datenbank zu lesen.

11. Verfahren nach Anspruch 10, **dadurch gekennzeichnet, dass** der Papierbogen mit einem individualisierten Rasterdruckdatenspeicher (32) versehen wird.

## Claims

1. Process for safing of coded data by application of a matrix print on an object, wherein the printed surface of the object is sub-divided into mutually adjoining matrix cells composed of matrix points and having a pre-defined shape and in each matrix cell at least two patterns R, I, ... are printed, **characterised in that** for the storage of at least two information bits, each of the patterns R, I, ...
i) is selected from pair-wise isohedric, non-overlapping sub-patterns (Rₒ, R₁) respectively (Iₒ, I₁),
ii) borders via of at least one matrix point on another sub-pattern of the same matrix cell and
iii) occupies different matrix points in the matrix cell
iv) and wherein at least one of the patterns R, I, ... is/are printed bordering on the edge of the matrix cell and additionally on at least one pattern R, I, ... of a different matrix cell.

2. Process according to claim 1, **characterised in that** patterns R,I result in a composed pattern which occupies two-thirds of each of the
- vertical edge regions of a rectangular matrix cell top left and down right, or of the
- horizontal edge regions of a rectangular matrix cell top left and down right or of the
- vertical edge regions of a rectangular matrix cell top right and down left, or of the
- horizontal edge regions of a rectangular matrix cell top right and down left.

3. Process according to claim 2, **characterised in that** for storing of at least one additional information bit at at least at one of the patterns R,I,... in a dependent manner a defined number of matrix points along the edge are omitted or supplemented.

4. Process according to claim 3 **characterised in that** omitting or supplementing of the defined number of matrix points at the occupied two-thirds along the edge of the
- vertical edge regions of the rectangular matrix cell top left and down right, results in a pattern (9,13,17), and of the
- horizontal edge regions of the rectangular matrix cell top left and down right results in a pattern (10,14,18), and of the
- vertical edge regions of the rectangular matrix cell top right and down left, results in a pattern (11,15,19), and of the
- horizontal edge regions of the rectangular matrix cell top right and down left results in a pattern (12,16,20).

5. Process according to at least one of claims 1 to 4, **characterised in that** for superposing of visual information in a matrix cell, the printed regions are replaced with unprinted ones.

6. Process according to at least one of claims 1 to 5, **characterised in that** in a matrix cell the patterns R, I, ... are printed in different colours in order to superpose visually discernable coloured graphics or alternatively, store additional digital information bits.

7. Process according to at least one of claims 1 to 6, **characterised in that** the matrix print memory is applied onto paper and thereby digital data and/or data concerning the individual paper structure are stored.

8. Process according to claim 7, **characterised in that** a paper is used which comprises an additional, printed calibration element, and of which only between 2 % and 15 % of the paper surface is covered with printing ink.

9. Process according to claim 8, **characterised in that** the paper being used has previously been imprinted with a calibration element composed of matrix cells wherein a sequence of at least two different patterns is printed in the adjoining matrix cells in such a manner that the pattern sequence is repeated at least partially after 3 x 5 or 7 x 9 matrix cells.

10. Process according to at least one of claims 7 to 9, **characterised in that** an identification code readable by a human and/or a machine and differing for each paper sheet is employed in order to read the data concerning the individual paper structure from a data bank.

11. Process according to claim 10, **characterised in that** the paper sheet is provided with an individualised matrix print data storage (32).

## Revendications

1. Procédé pour stocker des données codées par application d'une impression matricielle sur un objet, la surface imprimée de l'objet étant divisée en cellules matricielles contiguës de forme prédéfinie composées de points matriciels et dans chaque cellule étant imprimés au moins deux motifs R, I, ..., **caractérisé en ce que** pour stocker au moins deux bits d'information, chacun des motifs R, I, ...
i.) est sélectionné parmi des paires de sous-motifs non chevauchants (R₀, R₁) resp. (I₀, I₁) de même surface,
ii.) est contigu par au moins un point à un autre sous-motif de la même cellule,
iii.) occupe des points différents dans la cellule,
iv.) et au moins un des motifs R, I, ... étant imprimé de manière contiguë au bord de la cellule et en outre à au moins un motif R, I, ... d'une autre cellule.

2. Procédé selon la revendication 1, **caractérisé en ce que** les motifs R, I donnent un motif composé occupant deux tiers de chacune des
- zones de bord verticales d'une cellule rectangulaire en haut à gauche et en bas à droite, ou des
- zones de bord horizontales d'une cellule rectangulaire en haut à gauche et en bas à droite, ou des
- zones de bord verticales d'une cellule rectangulaire en haut à droite et en bas à gauche, ou des
- zones de bord horizontales d'une cellule rectangulaire en haut à droite et en bas à gauche.

3. Procédé selon la revendication 2, **caractérisé en ce que** pour stocker au moins un bit d'information supplémentaire, on supprime ou ajoute au bord, sur au moins un des motifs R, I, ..., un nombre défini de points en fonction de l'information.

4. Procédé selon la revendication 3, **caractérisé en ce que** la suppression ou l'ajout du nombre défini de points donne sur les deux tiers occupés des
- zones de bord verticales de la cellule rectangulaire en haut à gauche et en bas à droite un motif (9, 13, 17), et des
- zones de bord horizontales de la cellule rectangulaire en haut à gauche et en bas à droite un motif (10, 14, 18), et des
- zones de bord verticales de la cellule de trame rectangulaire en haut à droite et en bas à gauche un motif (11, 15, 19), et des
- zones de bord horizontales de la cellule de trame rectangulaire en haut à droite et en bas à gauche un motif (12, 16, 20).

5. Procédé selon au moins une des revendications 1 à 4, **caractérisé en ce que** pour superposer une information visuelle dans une cellule, on remplace les régions imprimées par des non imprimées.

6. Procédé selon au moins une des revendications 1 à 5, **caractérisé en ce que** l'on imprime dans une cellule les motifs R, I, ... en différentes couleurs pour superposer des graphiques colorés visuellement reconnaissables ou bien pour stocker des bits d'information numérique supplémentaires.

7. Procédé selon au moins une des revendications 1 à 6, **caractérisé en ce que** l'on applique le stockage de données par impression matricielle sur du papier, permettant ainsi de stocker des données numériques et/ou des données via la structure de papier individuelle.

8. Procédé selon la revendication 7, **caractérisé en ce que** l'on utilise un papier contenant un élément de calibrage imprimé supplémentaire, où seulement 2 à 15 % de la surface de papier sont recouverts d'encre d'impression.

9. Procédé selon la revendication 8, **caractérisé en ce que** l'on imprime sur le papier utilisé, au préalable, un élément de calibrage composé de cellules matricielles, et l'on imprime dans les cellules contiguës une suite d'au moins deux motifs différents de telle manière que la suite de motifs se répète au moins partiellement après 3 x 5 ou 7 x 9 cellules.

10. Procédé selon au moins une des revendications 7 à 9, **caractérisé en ce que** l'on utilise une identification différente pour chaque feuille de papier, lisible par l'homme et/ou une machine, pour lire les données via la structure de papier individuelle depuis une banque de données.

11. Procédé selon la revendication 10, **caractérisé en ce que** l'on munit la feuille de papier d'un stockage de données par impression matricielle individualisé (32).
